# EUROPÄISCHE PATENTSCHRIFT

(11) **EP 1 968 835 B1**
(45) Veröffentlichungstag und Bekanntmachung des Hinweises auf die Patenterteilung: **19.07.2017**
(21) Anmeldenummer: 06829242.4
(22) Anmeldetag: 01.12.2006
(51) Int. Cl.: B60T 17/08

(54) **KOMBINIERTER BETRIEBSBREMS- UND FEDERSPEICHERBREMSZYLINDER MIT INNERER ENTLÜFTUNG**
COMBINED SERVICE BRAKE AND STORED-ENERGY BRAKE CYLINDER WITH INTERNAL VENTILATION
CYLINDRE COMBINE POUR FREIN DE SERVICE ET FREIN ACCUMULATEUR A RESSORT AVEC DESAERAGE INTERNE

(30) Priorität: 02.12.2005 DE 202005018886 U
(43) Veröffentlichungstag der Anmeldung: 17.09.2008
(73) Patentinhaber: KNORR-BREMSE Systeme für Nutzfahrzeuge GmbH, 80809 München (DE)
(72) Erfinder: SAVAGNER, Nicolas, F-14100 Le Mesnil Eudes (FR); SCHODROWSKI, Antony, F-14100 Lisieux (FR)
(74) Vertreter: Mattusch, Gundula
(86) Internationale Anmeldenummer: PCT/EP2006/011576
(87) Internationale Veröffentlichungsnummer: WO 2007/062869

(56) Entgegenhaltungen:
- EP-A- 0 554 050
- DE-A1- 4 011 739
- DE-A1- 10 236 923
- DE-C1- 19 734 291
- FR-A1- 2 545 175

## Beschreibung

### Stand der Technik

Die Erfindung geht aus von einem kombinierten Betriebsbrems- und Federspeicherbremszylinder mit einer in einem Gehäuse des Betriebsbremszylinders angeordneten druckbeaufschlagbaren Membran, welche auf der einen Seite eine mit einem Betriebsbremsdruck beaufschlagbare Betriebsbremskammer und auf der anderen Seite eine Rückholfeder aufnehmende Kammer begrenzt, einem in einem Gehäuse des Federspeicherbremszylinders angeordneten, durch eine Speicherfeder betätigbaren Federspeicherbremskolben, welcher auf der einen Seite eine Federspeicherbremskammer und auf der anderen Seite eine eine Speicherfeder aufnehmende Federkammer begrenzt und eine Kolbenstange aufweist, welche ein Entlüftungsventil trägt, das eine Strömungsverbindung zwischen der Federkammer und der Betriebsbremskammer herstellt oder sperrt, gemäß dem Oberbegriff von Anspruch 1.

Ein solcher kombinierter Betriebsbrems- und Federspeicherbremszylinder ist beispielsweise aus der DE 40 11 739 A1 bekannt. Das Entlüftungsventil ist dort endseitig im hohlen Kolbenrohr des Federspeicherbremskolbens angeordnet, welcher abhängig vom Betriebszustand in die Betriebsbremskammer hineinragen kann. Das Entlüftungsventil hat die Aufgabe, beim Lösen der Feststellbremse den durch das Zurückfahren des Feststellbremskolbens und dadurch sich verkleinernde Volumen der Federkammer dort entstehenden Überdruck abzubauen, indem es durch diesen in Öffnungsstellung geschaltet wird und eine Strömungsverbindung zwischen der Federkammer und der Betriebsbremskammer herstellt. Beim Anfahren auf einer ebenen Fahrstrecke ist die Betriebsbremskammer entlüftet und steht mit einer Entlüftung eines Druckregelmoduls in Verbindung, da eine Betriebsbremsung nach dem Lösen der Feststellbremse nicht notwendig ist. Dann kann zumindest ein Teil des in der Federkammer überschüssigen Luftvolumens ausströmen, welche folglich von dort nicht direkt in die Atmosphäre gelangt, z.B. über ein in der Wandung des Federkammer angeordnetes Ventil, sondern über den Be- und Entlüftungsweg der Betriebsbremskammer. Deshalb spricht man in diesem Zusammenhang auch von innerer Entlüftung.

Beim Anfahren an einer ansteigenden Fahrstrecke ist es jedoch bei zunächst zugespannter Feststellbremse notwendig, vor dem Lösen der Feststellbremse wenigstens kurzzeitig zusätzlich die Betriebsbremse zuzuspannen, um ein Zurückrollen des Fahrzeugs beim Anfahren zu verhindern. In diesem Fall wird die Betriebsbremskammer belüftet. Bei ausreichend hoher Bremsanforderung durch den Fahrer vermag der in der Betriebsbremskammer und zugleich an der einen Seite des Kolbens anstehende Betriebsbremsdruck diesen gegen die Wirkung des sich in der Federkammer aufbauenden Drucks am Ventilsitz und dadurch das Entlüftungsventil geschlossen zu halten. Befinden sich allerdings aufgrund einer entsprechend geringen Betriebsbremsanforderung des Fahrers der Betriebsbremsdruck und/oder der Betriebsbremsdruckgradient unterhalb gewisser Schwellwerte, so reicht der an der einen Seite des Kolbens anstehende Betriebsbremsdruck nicht aus, um das Entlüftungsventil geschlossen zu halten. Dann strömt Druckluft von der Betriebsbremskammer über das geöffnete Entlüftungsventil in die Federkammer. Von dort entweicht sie über die Kolbendichtung und die Gehäusedichtung in die Atmosphäre, was zum einen störende Geräusche verursacht. Zum andern steht das über das Entlüftungsventil abströmende Luftvolumen nicht mehr zum Aufbau der Betriebsbremskraft zur Verfügung.

Der vorliegenden Erfindung liegt die Aufgabe zugrunde, einen kombinierten Betriebsbrems- und Federspeicherbremszylinder der eingangs erwähnten Art derart weiter zu entwickeln, dass die oben genannten Nachteile vermieden werden.

Diese Aufgabe wird erfindungsgemäß durch die Merkmale von Anspruch 1 gelöst.

### Vorteile der Erfindung

Das Entlüftungsventil des kombinierten Betriebsbrems- und Federspeicherzylinders gemäß der Erfindung weist folgende kennzeichnende Merkmale auf:
c) Ein einen Ventilkörper tragender Kolben ist vorgesehen, welcher in einem an der Kolbenstange ausgebildeten Zylinder axial verschieblich geführt ist,
d) wenigstens eine sich am Kolben abstützende Druckfeder belastet den Ventilkörper gegen einen ersten Ventilsitz am Kolben und gegen einen zweiten Ventilsitz am Zylinder,
e) der Ventilkörper ist durch den Druck in der Federkammer in eine vom ersten Ventilsitz und vom zweiten Ventilsitz abhebenden Richtung belastet,
f) der Kolben ist durch den Druck in der Betriebsbremskammer in einer den ersten Ventilsitz gegen den Ventilkörper drängenden und den Ventilkörper vom zweiten Ventilsitz abhebenden Richtung belastet, wobei
g) bei vom ersten Ventilsitz und/oder bei vom zweiten Ventilsitz abgehobenen Ventilkörper eine Strömungsverbindung zwischen der Betriebsbremskammer und der Federkammer hergestellt wird.

Durch diese Maßnahmen wird sichergestellt, dass das Entlüftungsventil geschlossen bleibt, wenn bei zugespannter Feststellbremse gleichzeitig die Betriebsbremse zugespannt wird. Somit kann keine Druckluft mehr von der Betriebsbremskammer über das Entlüftungsventil in die Federkammer überströmen und von dort in die Atmosphäre entweichen, wodurch störende Strömungsgeräusche verhindert werden.

Durch die in den Unteransprüchen aufgeführten Maßnahmen sind vorteilhafte Weiterbildungen und Verbesserungen der in den unabhängigen Ansprüchen angegebenen Erfindung möglich.

Genaueres geht aus der folgenden Beschreibung von Ausführungsbeispielen hervor.

### Zeichnungen

Nachstehend ist ein Ausführungsbeispiel der Erfindung in der Zeichnung dargestellt und in der nachfolgenden Beschreibung näher erläutert. In der Zeichnung zeigt
- Fig.1: eine Schnittdarstellung eines kombinierten Betriebsbrems- und Federspeicherbremszylinders gemäß einer bevorzugten Ausführungsform der Erfindung mit einem Entlüftungsventil;
- Fig.2: das Entlüftungsventil von Fig.1 in Schließstellung;
- Fig.3: das Entlüftungsventil von Fig.1 in einer Öffnungsstellung während des Zuspannens der Feststellbremse;
- Fig.4: das Entlüftungsventil von Fig.1 in einer Öffnungsstellung während des Lösens der Feststellbremse.

### Beschreibung des Ausführungsbeispiels

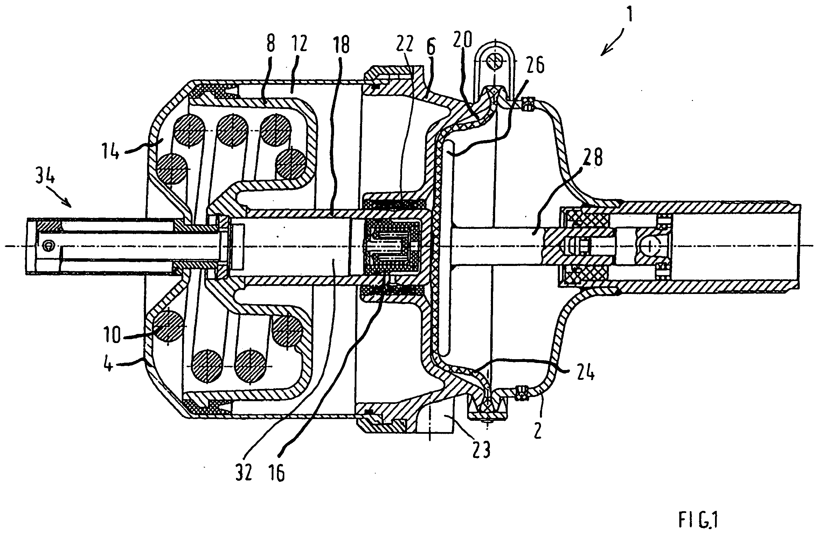

In Fig.1 ist zur beispielhaften Erläuterung der Erfindung ein kombinierter Betriebsbrems- und Federspeicherbremszylinder 1, nachfolgend Kombizylinder genannt, dargestellt. Der Kombizylinder besteht aus einem Betriebsbremszylinder 2 und aus einem mit diesem baulich und funktionell verbundenen Federspeicherbremszylinder 4. Der Betriebsbremszylinder 2 und der Federspeicherbremszylinder 4 sind durch eine Zwischenwand 6 voneinander getrennt. Innerhalb des Federspeicherbremszylinders 4 ist ein Federspeicherbremskolben 8 verschiebbar angeordnet, wobei an einer Seite des Federspeicherbremskolbens 8 eine Speicherfeder 10 anliegt. Die Speicherfeder 10 stützt sich an ihrer entgegen gesetzten Seite am Boden des Federspeicherbremszylinders 4 ab.

Zwischen dem Federspeicherbremskolben 8 und der Zwischenwand 6 ist eine Federspeicherbremskammer 12 ausgebildet, welche mit einem aus Maßstabsgründen nicht gezeigten Druckregelmodul in Verbindung steht, um diese zu belüften und zu entlüften. Bei Belüftung wird der Federspeicherbremskolben 8 unter Verspannung der Speicherfeder 10 axial in Lösestellung der Feststellbremse verschoben. Bei dieser Verschiebung des Federspeicherbremskolbens 8 wird die Luft, welche innerhalb der die Speicherfeder 10 aufnehmenden Federkammer 14 ansteht, über ein Entlüftungsventil 16 herausgedrückt. Wird dagegen zum Zwecke der Abbremsung die Federspeicherbremskammer 12 entlüftet, dann vermag die Speicherfeder 10 den Federspeicherbremskolben 8 in Zuspannstellung zu verschieben.

Der Federspeicherbremskolben 8 ist mit einer hohlen Kolbenstange 18 verbunden, welche sich durch die Zwischenwand 6 in eine Betriebsbremskammer 20 des Betriebsbremszylinders 2 erstreckt. Eine in der Zwischenwand 6 eingesetzte Dichtung 22 dichtet gegenüber der Außenwand der Kolbenstange 18 während deren Längsbewegung ab. In die Betriebsbremskammer 20 mündet ein Einlass 23, über welchen zum Betätigen des Betriebsbremszylinders 2 Druckluft eingelassen und abgelassen wird. Die Druckluft wirkt auf eine innerhalb des Betriebsbremszylinders 2 eingesetzte Membrane 24 ein, an deren entgegengesetzter Seite ein Druckstück in Form eines Membrantellers 26 vorgesehen ist. Der Membranteller 26 ist mit einer Druckstange 28 verbunden, die mit einem Bremsbetätigungsmechanismus außerhalb des Kombizylinders 1 zusammenwirkt. Hierbei kann es sich beispielsweise um Betätigungselemente einer Scheibenbremse eines Kraftfahrzeugs handeln. Der Betriebsbremszylinder 2 ist ein aktiver Bremszylinder, d.h. dass die Betriebsbremse durch Belüften der Betriebsbremskammer 20 zugespannt und durch Entlüften gelöst wird. Eine sich einerseits am Membranteller 26 und andererseits am Boden des Betriebsbremszylinders 2 abstützende, nicht gezeigte Rückholfeder sorgt dafür, dass die Druckstange 28 bei entlüfteter Betriebsbremskammer 20 in die Lösestellung zurückgeholt wird.

Das Entlüftungsventil 16 ist in dem vom Federspeicherbremskolben 8 weg weisenden Ende der Kolbenstange 18 angeordnet und genauer in deren Innenraum 32 aufgenommen. Dort ist zwar weiterhin eine hier nicht weiter interessierende Notlöseinrichtung 34 angeordnet, jedoch kann der Innenraum 32 der Kolbenstange 18 mit der Federkammer 14 kommunizieren.

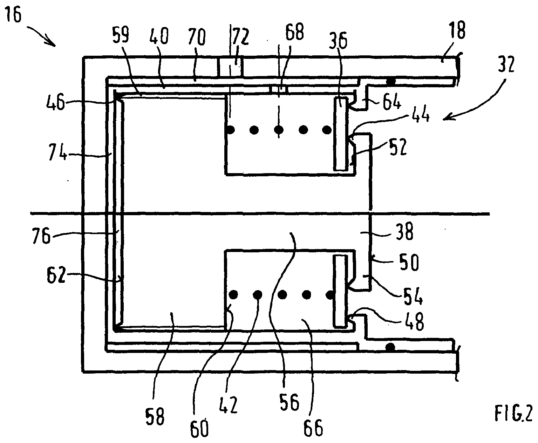

Das Entlüftungsventil 16 des kombinierten Betriebsbrems- und Federspeicherzylinders weist gemäß Fig.2 folgende Merkmale auf:
a) Ein einen Ventilkörper 36 tragender Kolben 38 ist vorgesehen, welcher in einem an der Kolbenstange 18 ausgebildeten Zylinder 40 axial verschieblich geführt ist,
b) wenigstens eine sich am Kolben 38 abstützende Druckfeder 42 belastet den Ventilkörper 36 gegen einen ersten Ventilsitz 44 am Kolben 38 und gegen einen zweiten Ventilsitz 48 am Zylinder 40,
c) der Ventilkörper 36 ist durch den Druck in der Federkammer 14 in eine vom ersten Ventilsitz 44 und vom zweiten Ventilsitz 48 abhebenden Richtung belastet,
d) der Kolben 38 ist durch den Druck in der Betriebsbremskammer 20 in einer den ersten Ventilsitz 44 gegen den Ventilkörper 36 drängenden und den Ventilkörper 36 vom zweiten Ventilsitz 48 abhebenden Richtung belastet,
e) zwischen dem Kolben 38 und einem Boden 74 des Zylinders 40 ist ein dritter Ventilsitz 46 ausgebildet, wobei
f) wenigstens eine Stellung des Kolbens 38 existiert, in welcher der erste Ventilsitz 44 vom Ventilkörper 36 abgehoben ist, der Ventilkörper 36 gegen den zweiten Ventilsitz 48 dichtet, der Kolben 38 vom dritten Ventilsitz 46 abgehoben ist und dann durch den Druck in der Betriebsbremskammer 20 in einer den ersten Ventilsitz 44 vom Ventilkörper 36 abhebenden Richtung belastet wird, und wobei
g) bei vom ersten Ventilsitz 44 und/oder bei vom zweiten Ventilsitz 48 abgehobenen Ventilkörper 36 eine Strömungsverbindung zwischen der Betriebsbremskammer 20 und der Federkammer 14 hergestellt wird.

Wie aus Fig.2 bis Fig.4 hervorgeht, hat der Kolben 38 im wesentlichen drei Abschnitte, einen ersten, der Federkammer 14 zugewandten Kolbenabschnitt mit einem ersten Kolbenteller 54, an dem eine erste Kolbenfläche 50 und eine zweite Kolbenfläche 52 ausgebildet ist, einen sich hieran anschließenden zweiten Kolbenabschnitt, der als Kolbenstange 56 ausgebildet ist und einen dritten, als zweiter Kolbenteller 58 ausgebildeten Kolbenabschnitt, an welchem eine dritte Kolbenfläche 60 und eine vierte Kolbenfläche 62 ausgebildet sind. Der Zylinder 40 ist dreh- und axialfest im Innenraum 32 der Kolbenstange 18 gehalten. Der Kolben 40 ist im wesentlichen durch den zweiten Kolbenteller 58 im Zylinder 40 axial geführt, wobei aber keine dichte Führung vorliegt, sondern zwischen der radial äußeren Umfangsfläche des zweiten Kolbentellers 58 und der radial inneren Umfangsfläche des Zylinders 40 ein schmaler Ringkanal 59 ausgebildet wird, durch welchen Druckluft strömen kann.

Zwischen der dritten Kolbenfläche 60, der radial inneren Umfangsfläche des Zylinders 40 und einem weiteren Boden 64 des Zylinders 40 ist eine erste Kammer 66 ausgebildet, wobei der Boden 64 des Zylinders 40 eine zentrale Durchgangsöffnung aufweist, durch welche sich der erste Kolbenteller 54 hindurcherstrecken kann. An seiner zur ersten Kammer 66 weisenden Fläche ist am Boden 64 des Zylinders 40 der zweite Ventilsitz 48 ausgebildet. Der erste Ventilsitz 44 befindet sich an der zur ersten Kammer 66 weisenden zweiten Kolbenfläche 52 des Kolbens 38. In der ersten Kammer 66 ist weiterhin die Druckfeder 42 aufgenommen, die sich einerseits am Ventilkörper 36 und andererseits an der dritten Kolbenfläche 60 am zweiten Kolbenteller 58 abstützt. Die Druckfeder 42 ist vorgespannt eingebaut.

Der Ventilkörper 36 ist vorzugsweise als ein die Kolbenstange 56 umgebender Ring ausgebildet, dessen äußerer Durchmesser kleiner als der innere Durchmesser des Zylinders 40 ist, so dass zwischen dem Ring 36 und dem Zylinder 40 ein lichter Ringspalt vorhanden ist. Der Ring 36 dichtet daher nur in axialer Richtung gegen den ersten Ventilsitz 44 am ersten Kolbenteller 54 bzw. gegen den zweiten Ventilsitz 48 am Boden 64 des Zylinders 40.

Mittels wenigstens einer radialen Durchgangsbohrung 68 im Zylinder 40 steht die erste Kammer 66 mit einer Ringkammer 70 stets, d.h. in jeder axialen Position des Kolbens 38 in Strömungsverbindung. Diese Ringkammer 70 umgibt den Zylinder 40 und ist wiederum über wenigstens eine radiale Durchgangsbohrung 72 in der Kolbenstange 18 mit der Betriebsbremskammer 20 verbunden. Weiterhin ist zwischen dem zweiten Kolbenteller 58 und dem Boden 74 des Zylinders 40 eine dritte Kammer 76 ausgebildet.

In Fig.2 ist das Entlüftungsventil 16 in geschlossener Stellung gezeigt, d.h. dass der Ring 36 am ersten Ventilsitz 44 und am zweiten Ventilsitz 48 axial dichtend anliegt und folglich keine Strömungsverbindung zwischen dem Innenraum 32 der Kolbenstange 18, der unter dem Druck der Federkammer 14 steht, und der Ringkammer 70 vorhanden ist, welche mit der Betriebsbremskammer 20 in Verbindung steht. Weiterhin dichtet der Kolben 38 in dieser Stellung gegen den dritten Ventilsitz 46, so dass keine Strömungsverbindung zwischen der dritten Kammer 76 und der ersten Kammer 66 besteht.

Ausgehend von diesem Zustand, in welchem weder die Betriebsbremse noch die Feststellbremse betätigt ist, wird nun die Feststellbremse bei noch gelöster Betriebsbremse zugespannt. Durch den von der Speicherfeder 10 verschobenen Federspeicherbremskolben 12 vergrößert sich die Federkammer 14 schlagartig, wodurch der Druck dort stark absinkt, beispielsweise unter den Atmosphärendruck. Auf die erste Kolbenfläche 50 wirkt damit der relativ niedrige Druck der Federkammer 14, die zweite Kolbenfläche 52 und die dritte Kolbenfläche 60 sind durch den Druck der Betriebsbremskammer 20 belastet, welcher etwa dem Atmosphärendruck entspricht.

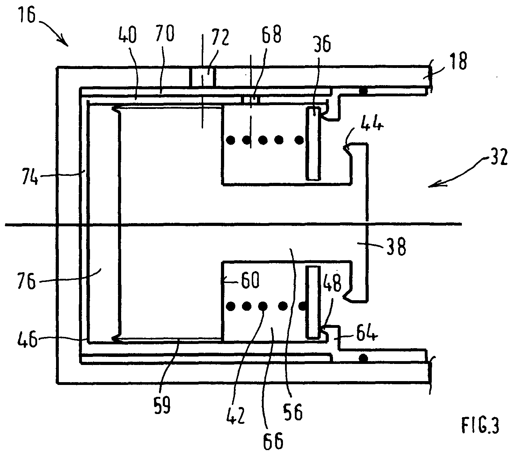

Durch den Druckunterschied wird der Kolben 38 in Fig.3 gegen die Wirkung der sich verkürzenden ersten Druckfeder 42 nach rechts verschoben, wodurch der erste Ventilsitz 44 vom Ring 36 abhebt und ein Strömungsquerschnitt freigegeben wird, wodurch Luft aus der Betriebsbremskammer 20 über die Durchgangsbohrung 72 in der Kolbenstange 18 in die Ringkammer 70, von dort über die radiale Durchgangsbohrung 68 im Zylinder 40 in die erste Kammer 66 und von dort schließlich in den Innenraum 32 der Kolbenstange 18 strömen kann, welcher wiederum mit der Federkammer 14 in druckleitender Verbindung steht. Somit kann ein Druckausgleich zwischen der Federkammer 14 und der Betriebsbremskammer 20 stattfinden. Hingegen bleibt der Ring 36 durch die Wirkung der Druckfeder 42 dichtend gegen den zweiten Ventilsitz 48 am Boden 64 des Zylinders 40 gepresst.

Durch der Verschiebung des Kolbens 38 in Fig.3 nach rechts hebt dieser vom dritten Ventilsitz 46 ab, wodurch eine Strömungsverbindung zwischen dem unter dem Druck der Betriebsbremskammer stehenden Ringkanal 59 und der dritten Kammer 76 geschaffen wird, welche dadurch allmählich mit diesem Druck beaufschlagt wird, welcher ungefähr dem Atmosphärendruck entspricht. Hieraus resultiert eine weitere, in der Figur nach rechts wirkende Druckkraft auf den Kolben 38, welcher dadurch in einer den ersten Ventilsitz 44 vom Ventilkörper 36 abhebenden Richtung belastet wird.

Der sich allmählich vergrößernde Druck in der Federkammer 14 lastet auch auf der dritten Kolbenfläche 60, so dass der Kolben 38 infolge der sich dort ergebenden Druckkraft in Fig.3 nach links verschoben wird, bis der erste Ventilsitz 44 wieder dichtend am Ring 36 anschlägt. Gleichzeitig schlägt auch der Kolben 38 wieder am Ventilsitz 46 am Boden 74 des Zylinders 40 an. Diese Bewegung wird durch die Federkraft der ersten Druckfeder 42 unterstützt, bis sich das Entlüftungsventil 16 wieder in der in Fig.2 gezeigten Schließstellung befindet.

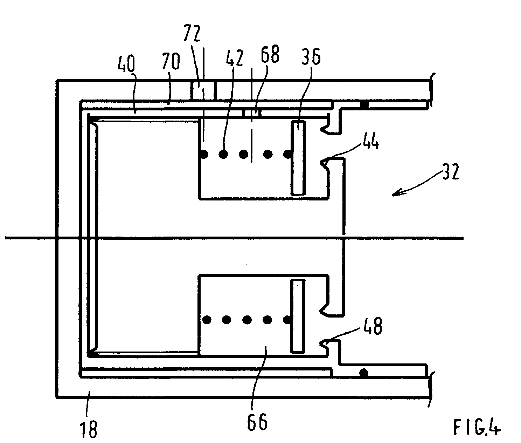

Beim Lösen der Feststellbremse steigt der Druck in der Federkammer 14 infolge deren Verkleinerung an. Wie anhand von Fig.4 leicht vorstellbar ist, wirkt dieser erhöhte Druck auf den Ring 36, wodurch sich dieser gegen die Wirkung der sich verkürzenden Druckfeder 42 nach links bewegt. Damit hebt der Ring 36 sowohl vom ersten Ventilsitz 44 als auch vom zweiten Ventilsitz 48 ab. Da der Ring 36 weder gegen den Zylinder 40 noch gegen die Kolbenstange 56 radial dichtet, sondern dort stets ein Ringspalt freigelassen ist, kann nun Druckluft von der Federkammer 14 über den Innenraum 32 der Kolbenstange 18, die erste Kammer 66, die Durchgangsbohrung 68 im Zylinder 40, die Ringkammer 70 und die Durchgangsbohrung 72 in der Kolbenstange 18 in die demgegenüber mit niedrigerem Druck beaufschlagte Betriebsbremskammer 20 strömen. Nach erfolgtem Druckausgleich zwischen der Federkammer 14 und der Betriebsbremskammer 20 wird der Ring 36 infolge der Wirkung der Druckfeder 42 nach rechts in die Schließstellung befördert, in welcher er wieder dichtend am ersten Ventilsitz 44 und am zweiten Ventilsitz 48 axial anliegt.

Fig.2 kennzeichnet auch eine Schließstellung des Entlüftungsventils 16, welche sich einstellt, wenn bei zugespannter Feststellbremse zusätzlich die Betriebsbremse betätigt wird. Eine solche Situation ergibt sich beispielsweise beim Anfahren hangaufwärts. Bei zugespannter Feststellbremse sinkt, wie bereits zu Fig.3 erläutert, der Druck in der Federkammer 14 ab, was dazu führt, dass der Kolben 38 sich nach rechts bewegt. Nach erfolgtem Druckausgleich zwischen der Federkammer 14 und der Betriebsbremskammer 20, d.h. bei durch Zuströmen von Luft aus der Betriebsbremskammer 20 erhöhtem Druck in der Federkammer 14 stellen dieser erhöhte Druck und die Druckfeder 42 wieder die Schließstellung her. Wenn nun ausgehend von diesem Zustand zusätzlich die Betriebsbremse betätigt wird, steigt der Druck in der Betriebsbremskammer 20 an. Dieser erhöhte Betriebsbremsdruck steht dann auch in der ersten Kammer 66 an, weil Druckluft dorthin über die Durchgangsbohrung 72 in der Kolbenstange 18, die Ringkammer 70 und die Durchgangsbohrung 68 im Zylinder 40 gelangen kann. Dieser Betriebsbremsdruck wirkt auch auf den Ring 36, wodurch dieser seine Dichtwirkung gegen den ersten Ventilsitz 44 und den zweiten Ventilsitz 48 verstärkt und die Wirkung der ersten Druckfeder 42 unterstützt, die den Ring 36 dort hält.

### Bezugszeichenliste

- 1: Betriebsbrems- und Federspeicher
- 2: Betriebsbremszylinder
- 4: Federspeicherbremszylinder
- 6: Zwischenwand
- 8: Federspeicherbrmskolben
- 10: Speicherfeder
- 12: Federspeicherbrmskammer
- 14: Federkammer
- 16: Entlüftungsventil
- 18: Kolbenstange
- 20: Betriebsbremskammer
- 22: Dichtung
- 23: Einlass
- 24: Membrane
- 26: Membranteller
- 28: Druckstange
- 32: Innenraum
- 34: Notlöseeinrichtung
- 36: Ventilkörper
- 38: Kolben
- 40: Zylinder
- 42: Druckfeder
- 44: erster Ventilsitz
- 46: dritter Ventilsitz
- 48: zweiter Ventilsitz
- 50: erste Kolbenfläche
- 52: zweite Kolbenfläche
- 54: erster Kolbenteller
- 56: Kolbenstange
- 58: zweiter Kolbenteller
- 59: Ringkanal
- 60: dritte Kolbenfläche
- 62: vierte Kolbenfläche
- 64: Boden
- 66: erste Kammer
- 68: Durchgangsbohrung
- 70: Ringkammer
- 72: Durchgangsbohrung
- 74: Boden
- 76: dritte Kammer

## Patentansprüche

1. Kombinierter Betriebsbrems- und Federspeicherbremszylinder (1) mit:
a) Einer in einem Gehäuse des Betriebsbremszylinders (2) angeordneten druckbeaufschlagbaren Membran (24), welche auf der einen Seite eine mit einem Betriebsbremsdruck beaufschlagbare Betriebsbremskammer (20) und auf der anderen Seite eine Rückholfeder aufnehmende Kammer begrenzt,
b) einem in einem Gehäuse des Federspeicherbremszylinders (4) angeordneten, durch eine Speicherfeder (10) betätigbaren Federspeicherbremskolben (8), welcher auf der einen Seite eine Federspeicherbremskammer (12) und auf der anderen Seite eine eine Speicherfeder (10) aufnehmende Federkammer (14) begrenzt und eine Kolbenstange (18) aufweist, welche ein Entlüftungsventil (16) trägt, das eine Strömungsverbindung zwischen der Federkammer (14) und der Betriebsbremskammer (20) herstellt oder sperrt,
**dadurch gekennzeichnet, dass** das Entlüftungsventil (16) folgende Merkmale aufweist:
c) Ein einen Ventilkörper (36) tragender Kolben (38) ist vorgesehen, welcher in einem an der Kolbenstange (18) ausgebildeten Zylinder (40) axial verschieblich geführt ist,
d) wenigstens eine sich am Kolben (38) abstützende Druckfeder (42) belastet den Ventilkörper (36) gegen einen ersten Ventilsitz (44) am Kolben (38) und gegen einen zweiten Ventilsitz (48) am Zylinder (40),
e) der Ventilkörper (36) ist durch den Druck in der Federkammer (14) in eine vom ersten Ventilsitz (44) und vom zweiten Ventilsitz (48) abhebenden Richtung belastet,
f) der Kolben (38) ist durch den Druck in der Betriebsbremskammer (20) in einer den ersten Ventilsitz (44) gegen den Ventilkörper (36) drängenden und den Ventilkörper (36) vom zweiten Ventilsitz (48) abhebenden Richtung belastet, wobei
g) bei vom ersten Ventilsitz (44) und/oder bei vom zweiten Ventilsitz (48) abgehobenen Ventilkörper (36) eine Strömungsverbindung zwischen der Betriebsbremskammer (20) und der Federkammer (14) hergestellt wird.

2. Betriebsbrems- und Federspeicherbremszylinder nach Anspruch 1, **dadurch gekennzeichnet, dass** zwischen dem Kolben (38) und einem Boden (74) des Zylinders (40) ein dritter Ventilsitz (46) ausgebildet ist, wobei wenigstens eine Stellung des Kolbens (38) existiert, in welcher der erste Ventilsitz (44) vom Ventilkörper (36) abgehoben ist, der Ventilkörper (36) gegen den zweiten Ventilsitz (48) dichtet, der Kolben (38) vom dritten Ventilsitz (46) abgehoben ist und dann durch den Druck in der Betriebsbremskammer in einer den ersten Ventilsitz (44) vom Ventilkörper (36) abhebenden Richtung belastet wird.

3. Betriebsbrems- und Federspeicherbremszylinder nach Anspruch 2, **dadurch gekennzeichnet, dass** der Kolben (38) in dem Zylinder (40) spielbehaftet geführt, wobei zwischen dem Kolben (38) und dem Zylinder (40) ein Ringkanal (59) ausgebildet ist, in welchem der in der Betriebsbremskammer (20) herrschende Druck ansteht.

4. Betriebsbrems- und Federspeicherbremszylinder nach Anspruch 3, **dadurch gekennzeichnet, dass** bei vom dritten Ventilsitz (46) am Boden (74) des Zylinders (40) abgehobenem Kolben (38) der Ringkanal (59) mit einer Kammer (76) in Strömungsverbindung bringbar ist, welche durch den Kolben (38) und den Boden (74) des Zylinders (40) begrenzt wird.

5. Betriebsbrems- und Federspeicherbremszylinder nach wenigstens einem der vorhergehenden Ansprüche, **dadurch gekennzeichnet, dass** der Ventilkörper (36) durch einen axial dichtenden Ring gebildet wird, an dem sich die Druckfeder (42) abstützt.

6. Betriebsbrems- und Federspeicherbremszylinder nach wenigstens einem der vorhergehenden Ansprüche, **dadurch gekennzeichnet, dass** der Zylinder (40) innerhalb der Kolbenstange (18) endseitig ausgebildet ist.

## Claims

1. Combined service brake and stored-energy brake cylinder (1) having:
a) a diaphragm (24) which is arranged in a housing of the service brake cylinder (2), can be loaded with pressure and delimits a service brake chamber (20) which can be loaded with a service brake pressure on one side and a chamber which accommodates restoring springs on the other side,
b) a stored-energy brake piston (8) which is arranged in a housing of the stored-energy brake cylinder (4), can be actuated by a storage spring (10), delimits a stored-energy brake chamber (12) on one side and a spring chamber (14) which accommodates a storage spring (10) on the other side, and has a piston rod (18) which carries a venting valve (16) which produces or shuts off a flow connection between the spring chamber (14) and the service brake chamber (20),
**characterized in that** the venting valve (16) has the following features:
c) a piston (38) is provided which carries a valve body (36) and is guided axially displaceably in a cylinder (40) which is formed on the piston rod (18),
d) at least one compression spring (42) which is supported on the piston (38) loads the valve body (36) against a first valve seat (44) on the piston (38) and against a second valve seat (48) on the cylinder (40),
e) the valve body (36) is loaded by the pressure in the spring chamber (14) in a direction which lifts it up from the first valve seat (44) and from the second valve seat (48),
f) the piston (38) is loaded by the pressure in the service brake chamber (20) in a direction which presses the first valve seat (44) against the valve body (36) and lifts the valve body (36) up from the second valve seat (48),
g) a flow connection being produced between the service brake chamber (20) and the spring chamber (14) when the valve body (36) is lifted up from the first valve seat (44) and/or from the second valve seat (48).

2. Service brake and stored-energy brake cylinder according to Claim 1, **characterized in that** a third valve seat (46) is formed between the piston (38) and a base (74) of the cylinder (40), at least one position of the piston (38) existing, in which the first valve seat (44) is lifted up from the valve body (36), the valve body (36) seals against the second valve seat (48), the piston (38) is lifted up from the third valve seat (46) and is then loaded by the pressure in the service brake chamber in a direction which lifts the first valve seat (44) up from the valve body (36).

3. Service brake and stored-energy brake cylinder according to Claim 2, **characterized in that** the piston (38) is guided with play in the cylinder (40), an annular channel (59) being formed between the piston (38) and the cylinder (40), in which annular channel (59) the pressure is present which prevails in the service brake chamber (20).

4. Service brake and stored-energy brake cylinder according to Claim 3, **characterized in that**, when the piston (38) is lifted up from the third valve seat (46) on the base (74) of the cylinder (40), the annular chamber (59) can be brought into a flow connection with a chamber (76) which is delimited by the piston (38) and the base (74) of the cylinder (40).

5. Service brake and stored-energy brake cylinder according to at least one of the preceding claims, **characterized in that** the valve body (36) is formed by an axially sealing ring, on which the compression spring (42) is supported.

6. Service brake and stored-energy brake cylinder according to at least one of the preceding claims, **characterized in that** the cylinder (40) is formed within the piston rod (18) on the end side.

## Revendications

1. Cylindre (1) combiné de frein de service et de frein à ressort accumulateur, comprenant :
a) une membrane (24), qui est disposée dans une enveloppe du cylindre (2) de frein de service, qui peut être soumise à l'action de la pression et qui délimite, d'un côté, une chambre (20) de frein de service pouvant être soumise à une pression de frein de service et, de l'autre côté, une chambre de réception d'un ressort de rappel,
b) un piston (8) de frein à ressort accumulateur, qui est disposé dans une enveloppe du cylindre (4) du frein à ressort accumulateur, qui peut être actionné par un ressort (10) accumulateur, qui délimite, d'un côté, une chambre (12) de frein à ressort accumulateur et, de l'autre côté, une chambre (14) de ressort recevant un ressort (10) accumulateur et qui a une tige (18) de piston, laquelle porte une soupape (16) de purge, qui ménage une liaison d'écoulement entre la chambre (14) de ressort et la chambre (20) de frein de service ou l'obture,
**caractérisé en ce que** la soupape (16) de purge a les caractéristiques suivantes :
c) il est prévu un piston (38), qui porte un obturateur (36) et qui est guidé coulissant axialement dans un cylindre (40) constitué sur la tige (18) de piston,
d) au moins un ressort (42) de compression, s'appuyant sur le piston (38), pousse l'obturateur sur un premier siège (44) de soupape du piston (38) et sur un deuxième siège (48) de soupape du cylindre (40),
e) l'obturateur (36) est poussé par la pression dans la chambre (14) de ressort dans un sens, le soulevant du premier siège (44) de soupape et du deuxième siège (48) de soupape,
f) le piston (38) est poussé par la pression dans la chambre (20) de pression de service dans un sens, repoussant le premier siège (44) de soupape sur l'obturateur (26) et soulevant l'obturateur (36) du deuxième siège (48) de soupape, dans lequel
g) lorsque l'obturateur (36) est soulevé du premier siège (44) de soupape et/ou du deuxième siège (4) de soupape, une liaison d'écoulement est ménagée entre la chambre (20) de frein de service et la chambre (14) de ressort.

2. Cylindre de frein de service et de frein à ressort accumulateur suivant la revendication 1, **caractérisé en ce qu'**il est constitué, entre le piston (38) et un fond (74) du cylindre (40), un troisième siège (46) de soupape, en ayant au moins une position du piston (38), dans laquelle le premier siège (44) de soupape est soulevé de l'obturateur (36), l'obturateur (36) vient de manière étanche sur le deuxième siège (48) de soupape, le piston (38) est soulevé du troisième siège (46) de soupape et ensuite est poussé par la pression dans la chambre de frein de service dans un sens soulevant le premier siège (44) de soupape de l'obturateur (36).

3. Cylindre de frein de service et de frein à ressort accumulateur suivant la revendication 2, **caractérisé en ce que** le piston (38) est guidé sans jeu dans le cylindre (40), un canal (59) annulaire, dans lequel s'applique la pression régnant dans la chambre (20) de frein de service, étant constitué entre le piston (38) et le cylindre (40).

4. Cylindre de frein de service et de frein à ressort accumulateur suivant la revendication 3, **caractérisé en ce que**, lorsque le piston (38) est soulevé du troisième siège (46) de soupape au fond (74) du cylindre (40), le canal (59) annulaire peut être mis en liaison d'écoulement avec une chambre (76) délimitée par le piston (38) et par le fond (74) du cylindre (40).

5. Cylindre de frein de service et de frein à ressort accumulateur suivant au moins l'une des revendications précédentes, **caractérisé en ce que** l'obturateur (36) est formé par une bague, qui donne de l'étanchéité axialement et sur lequel s'appuie le ressort (42) de compression.

6. Cylindre de frein de service et de frein à ressort accumulateur suivant au moins l'une des revendications précédentes, **caractérisé en ce que** le cylindre (40) est constitué, du côté de l'extrémité à l'intérieur de la tige (18) de piston.
